(19) Europäisches Patentamt
European Patent Office
Office européen des brevets

(11) EP 2 389 817 A1

(12) DEMANDE DE BREVET EUROPEEN

(43) Date de publication:
30.11.2011 Bulletin 2011/48

(51) Int Cl.:
A23G 9/00 (2006.01)   A23L 1/00 (2006.01)
A23L 1/0532 (2006.01)   A23L 1/09 (2006.01)

(21) Numéro de dépôt: 11305555.2

(22) Date de dépôt: 09.05.2011

(84) Etats contractants désignés:
AL AT BE BG CH CY CZ DE DK EE ES FI FR GB
GR HR HU IE IS IT LI LT LU LV MC MK MT NL NO
PL PT RO RS SE SI SK SM TR
Etats d'extension désignés:
BA ME

(30) Priorité: 28.05.2010  FR 1054164

(71) Demandeur: TEREOS
02390 Origny Sainte Benoite (FR)

(72) Inventeurs:
• Develter, Céline
  62111, BIENVILLERS AU BOIS (FR)
• Havet, Christophe
  59120, LOOS (FR)

(74) Mandataire: Mouget-Goniot, Claire
Grosset-Fournier & Demachy
54, rue Saint-Lazare
75009 Paris (FR)

(54) Melange sec pulverulent pour sorbets et glaces aux fruits

(57) Mélange sec pulvérulent pour la préparation de sorbet ou de glace aux fruits à l'aide d'une machine à glace, le dit mélange étant apte à être mélangé à des fruits ou à des préparations à base de fruits comprenant : au moins un sucre, au moins un agent foisonnant, au moins un agent stabilisant, au moins un acide alimentaire, le rapport agent stabilisant/agent foisonnant étant supérieur à 10, le rapport sucres/agent foisonnant étant supérieur à 100 et le rapport sucres totaux/agent stabilisant étant supérieur à 100.

EP 2 389 817 A1

## EP 2 389 817 A1

**Description**

La présente invention a pour objet une composition pulvérulente et son utilisation pour la préparation de sorbets et de glace aux fruits à l'aide d'une machine à glace.

Les glaces aux fruits et les sorbets sont des produits largement répandus sur le marché. Leur fabrication nécessite la mise en oeuvre d'un mélange contenant des fruits ou une préparation à base de fruits qui est ensuite soumis à une étape de turbinage avant d'être soumis à une congélation.

Des procédés mettant en oeuvre des mélanges pulvérulents secs qui sont ajoutés aux fruits ou à la préparation à base de fruits ont déjà été décrits mais ne donnent pas complètement satisfaction. Ainsi la demande française 2 885 013 décrit une préparation sèche sans conservateur et contenant des matières grasses végétales pour l'élaboration de sorbet. Le brevet américain US 5 082 682 décrit une composition pulvérulente sèche sans matière grasse à base d'hydrolysat d'amidon utilisée dans la préparation de crèmes glacées qui peuvent contenir des fruits. La demande GB 341963 décrit un mélange sec pulvérulent utilisable pour la préparation de glaces, ledit mélange comprenant du saccharose ayant des particules d'un diamètre moyen compris entre 50 et 500 microns. La demande de brevet européen EP 2 145 546 décrit un mélange sec pulvérulent utilisable dans la préparation de sorbets et de glaces aux fruits sans sorbetière.

La présente demande a pour objectif de pallier les inconvénients des mélanges disponibles sur le marché, notamment de fournir un mélange pulvérulent sec qui permet de préparer des sorbets et des glaces aux fruits ménagers ou artisanaux.

La présente invention a donc pour objet un mélange sec pulvérulent pour la préparation de sorbet ou de glace aux fruits à l'aide d'une machine à glace, le dit mélange étant apte à être mélangé à des fruits ou à des préparations à base de fruits comprenant :

     a. au moins un sucre,
     b. au moins un agent foisonnant,
     c. au moins un agent stabilisant et
     d. au moins un acide alimentaire,

le rapport agent stabilisant/agent foisonnant étant supérieur à 10, le rapport sucres/agent foisonnant étant supérieur à 100 et le rapport sucres totaux/agent stabilisant étant supérieur à 100.

Au sens de la présente invention on entend par « sorbet » un mélange de fruits et du mélange sec pulvérulent selon l'invention dans lequel aucune matière grasse n'est ajoutée et par « glace aux fruits » un mélange de fruits, du mélange sec pulvérulent selon l'invention et de matières grasses (crème et lait), dans lequel les matières grasses représentent au moins 5 % du mélange et les fruits au moins 15% du mélange.

Les sorbets et les glaces aux fruits sont des denrées alimentaires de consistance pâteuse ou solide obtenues par congélation ou surgélation, stockées et consommées sous forme congelée.

Au sens de la présente invention on entend par « fruits » aussi bien des purées de fruits frais, de la pulpe de fruit, des jus de fruits et/ou de leurs mélanges.

Au sens de la présente invention on entend par « préparation à base de fruits » le mélange de fruits avec d'autres ingrédients tels que le lait et/ou la crème.

Au sens de la présente invention on entend par « machine à glace » les sorbetières ménagères à accumulation de froid ou à groupe froid autonome et les machines à glace artisanale à groupe froid autonome.

Au sens de la présente invention on entend par « agent foisonnant » un agent émulsifiant qui favorise l'incorporation de l'air dans un mélange mixé soumis à l'étape de turbinage. On peut citer à titre d'exemples non limitatif les protéines animales hydrolysées ou non, telles que les protéines de lait et les protéines végétales hydrolysées ou non comme par exemple les protéines hydrolysées de maïs, de soja, de blé et de pois ainsi que leurs mélanges.

Au sens de la présente invention on entend par « agent stabilisant » les épaississants comme par exemple les carraghénanes, la gomme de xanthane, la gomme de guar, la gomme arabique et les alginates et/ou les gélifiants comme par exemple les pectines et les carraghénanes. Ces agents stabilisants développent leurs propriétés gélifiantes ou épaississantes de préférence à froid.

Au sens de la présente invention on entend par « sucre », les sucres couramment utilisés comme le saccharose, le dextrose, le fructose, les maltodextrines sous forme sèche et les sirops de glucose sous forme sèche ainsi que leurs mélanges.

Au sens de la présente invention on entend par « acide alimentaire », notamment l'acide lactique, l'acide malique, l'acide citrique et l'acide ascorbique.

Dans un mode de réalisation avantageux de l'invention, le mélange sec pulvérulent contient :

     a) 75% à 99% en poids total du mélange sec de saccharose

b) 0 à 25% en poids total du mélange sec de dextrose, avantageusement de 5 à 20%,

c) 0 à 10% en poids total du mélange sec de fructose, avantageusement de 3 à 8%,

d) 0,5 à 2% en poids total du mélange sec d'au moins un acide alimentaire, avantageusement 0,5 à 2 % d'acide citrique,

e) 0,5 à 1% en poids total du mélange sec d'au moins un agent stabilisant et

f) 0,01 à 0,095% en poids total du mélange sec d'au moins un agent foisonnant.

Dans un mode de réalisation avantageux de l'invention, l'agent foisonnant est la protéine de pois hydrolysée.

Dans un autre mode de réalisation avantageux de l'invention, l'agent stabilisant est choisi parmi les épaississants et les gélifiants, avantageusement parmi les carraghénanes.

La présente invention a également pour objet un procédé de préparation d'un sorbet ou d'une glace aux fruits comprenant les étapes suivantes :

a) ajouter à des fruits ou à une préparation à base de fruits le mélange sec pulvérulent,

b) mixer l'ensemble,

c) placer le mélange mixé dans la machine à glace, préalablement refroidie si le système de froid est un accumulateur de froid,

d) laisser turbiner entre 5 et 60 minutes selon le type de machine à glace, et

e) conditionner et stocker au congélateur.

Au sens de la présente invention, on entend par « turbiner » une opération réalisée en machine à glace lors de laquelle le mélange mixé obtenu à l'étape b) est brassé et refroidi progressivement au contact de la paroi froide de la sorbetière ou de la machine à glace; le brassage régulier à froid permet d'une part d'introduire de l'air pour aérer le mélange (foisonnement) et d'autre part limiter ou éviter la cristallisation du mélange (mix) sur les parois de la cuve. Le turbinage peut durer de 5 à 10min pour une machine à glace artisanale (avec un groupe froid) et 30 à 60min pour des sorbetières ménagères. La température du sorbet ou de la glace aux fruits en fin de turbinage est généralement comprise entre -5 et - 10°C.

On entend par « mix » le mélange mixé obtenu à l'étape b) et comprenant des fruits ou à une préparation à base de fruits et le mélange sec pulvérulent.

Le conditionnement et le stockage des sorbets selon l'invention sont réalisés dans des conditions classiques connues de l'homme du métier. Ainsi, la congélation permet de conserver les sorbets à -18°C pour une durée de 1 à 8 semaines.

Dans un mode de réalisation avantageux du procédé selon l'invention, le rapport fruit ou préparation à base de fruits/mélange sec pulvérulent est compris entre 2,5 et 3,5 avantageusement égal à 3.

L'invention a également pour objet un sorbet ou une glace aux fruits préparés en machine à glace à partir de fruits ou d'une préparation à base de fruits et du mélange sec pulvérulent tel que décrit précédemment présentant une bonne cuillérabilité, un foisonnement suffisant et une texture en bouche lisse non pailletée.

Au sens de la présente invention on entend par « cuillérabilité » la capacité à réaliser des boules avec un sorbet ou une glace aux fruits dès la sortie du congélateur

Cette « cuillérabilité » est évaluée en mesurant la dureté du sorbet ou de la glace aux fruits tempéré à -15°C par toute technique connue d'homme du métier notamment par une mesure au texturomètre.

La mesure de la dureté est donnée par la force de compression. Elle est réalisée avec un Texturomètre TAXT2i [®] dans les conditions suivantes:

Module utilisé : cylindre 25mm

Vitesse test : 1mm/s

Déplacement: 30mm

Température d'analyse des sorbets: -15°C

La dureté du sorbet ou de la glace aux fruits doit être comprise entre 40N et 65N pour obtenir une bonne « « cuillérabilité » du produit.

Le « foisonnement » d'un sorbet ou d'une glace aux fruits doit être suffisant pour obtenir une perception gustative légère et fondante. Il ne doit pas être pour autant trop foisonné car dans ce cas, on obtient une perception en bouche mousseuse non caractéristique d'un sorbet.

Le foisonnement est donné par la formule suivante :

$$(\%) = ((\text{masse d'un litre de mélange (mix) avant turbinage - masse d'un litre de glace après}$$
$$\text{turbinage}) / \text{masse d'un litre de glace après turbinage}) \times 100$$

Lors des étapes de turbinage et de congélation du sorbet ou de la glace aux fruits, il y a formation de cristaux de glace. La plus ou moins grande finesse de ces cristaux a une influence sur la texture en bouche qui, au sens de la présente invention, est caractérisée par le « pailletage ». Si les cristaux sont très fins, la texture du sorbet sera dite « lisse non pailletée ». La texture du sorbet sera jugée « lisse ou non pailletée » pour les cristaux très fins et « pailletée » à « très pailletée » pour de plus gros cristaux.

L'invention a également pour objet l'utilisation d'un mélange sec pulvérulent tel que défini précédemment comme sucre pour la préparation de sorbets à base de fruits ou de préparation à base de fruits.

La mise en oeuvre du procédé permet la préparation de sorbets à haute teneur en fruits. Ce mode de préparation à froid permet aussi de bien respecter le goût du fruit.

Les sorbets obtenus avec la préparation selon l'invention se caractérisent par un bon taux de foisonnement, une texture cuillérable et onctueuse et une bonne résistance à la fonte.

L'invention sera mieux comprise à l'aide des exemples 1 à 7 et des figures 1 à 3 qui suivent.

La figure 1 représente le foisonnement de différents types de sorbets préparés selon l'exemple 6. 1 = sorbet préparé selon EP 2 145 546 sans machine à glace; 2 = sorbet préparé selon EP 2 145 546 avec machine à glace; 3 = sorbet selon l'invention avec machine à glace.

La figure 2 illustre les caractéristiques organoleptiques d'un sorbet préparé selon EP 2 145 546 avec machine à glace et celles d'un sorbet selon l'invention préparé avec machine à glace.

La figure 3 illustre les caractéristiques organoleptiques d'un sorbet préparé selon EP 2 145 546 sans machine à glace et celles d'un sorbet selon l'invention préparé avec machine à glace.

## EXEMPLE 1 : PREPARATION D'UN SORBET AUX FRUITS ROUGES

**1.1. *Préparation du mélange sec :*** les ingrédients sont mélangés pour donner le mélange pulvérulent sec suivant :

Composition du mélange sec pulvérulent % :

| | | |
|---|---|---|
| - | Sucre | 80 |
| - | fructose | 4,17 |
| - | dextrose | 14,0 |
| - | acide citrique | 0,9 |
| - | agent stabilisant :- carraghénanes | 0,85 |
| - | agent foisonnant : protéine de pois | <u>0,08</u> |
| | | 100 |

### 1.2. Préparation du sorbet

200 g du mélange sec pulvérulent préparé selon l'étape 1.1 sont ajoutés à 600 g de fruits rouges (fraises, framboises, ou autres). Le mélange est ensuite mixé dans un bol mixer ou un robot ménager pendant 2 à 3 mn. La préparation est ensuite transférée dans une sorbetière de ménage (1,5 l) à accumulation de froid préalablement réfrigérée un minimum de 12h au congélateur ou dans une sorbetière à groupe froid indépendant, puis turbinée environ 30 à 60 mn en fonction des indications du fabriquant de sorbetières.

La température de la préparation en fin de programme est d'environ - 5°C. Le taux de foisonnement obtenu est de 75%.

La préparation glacée est ensuite mise en bac avant congélation à -18°C.

Après quelques heures de congélation, on obtient un sorbet à la fois aéré et onctueux, parfaitement cuillérable dès la sortie du congélateur. La dureté obtenue est de 55N (pour un sorbet fraise)

La teneur en sucres ajoutés du sorbet est de 25%.

## EXEMPLE 2 : PREPARATION D'UN SORBET AUX FRUITS JAUNES

**2.1. Préparation du mélange sec :** les ingrédients sont mélangés pour donner le mélange pulvérulent sec suivant :

Composition du mélange sec pulvérulent % :
- Sucre      94,0
- fructose      4,07
- acide citrique      1
- agents stabilisant:   - carraghénanes    0,70
                  - guar    0,15
- agent foisonnant : protéine de pois    <u>0,08</u>
                                    100

### 2.2. Préparation du sorbet

200 g du mélange sec pulvérulent préparé selon l'étape 2.1 sont ajoutés à 600 g de fruits jaunes (pêches, poires, ou autre). Le mélange est ensuite mixé dans un bol mixer 2 à 3 mn. La préparation est ensuite transférée dans une sorbetière de ménage à accumulation de froid préalablement réfrigérée 12h au congélateur, puis turbinée de 30 mn à 60 mn selon le modèle de sorbetière y utilisé. La température de la préparation en fin de programme est d'environ -5°C. Le taux de foisonnement obtenu est de 65%.
La préparation glacée est ensuite mise en bac avant congélation à -18°C. Après quelques heures de congélations, on obtient un sorbet à la fois aéré et onctueux, parfaitement cuillérable dès la sortie du congélateur. La dureté obtenue est de 50N (pour un sorbet ananas) ou 65N (pour un sorbet poire)
La teneur en sucres ajoutés du sorbet est de 25%

## EXEMPLE 3 : PREPARATION D'UN SORBET A PARTIR DE JUS DE FRUITS

**3.1. Préparation du mélange sec :** les ingrédients sont mélangés pour donner le mélange pulvérulent sec suivant :

Composition du mélange sec pulvérulent % :
- Sucre      77,5
- dextrose      15
- fructose      5
- acide citrique      1,9
- agent stabilisant :   - carraghénanes    0,40
                  - guar    0,15
- agent foisonnant : protéine de pois    <u>0,05</u>
                                    100

### 3.2. Préparation du sorbet

200 g du mélange sec pulvérulent préparé selon l'étape 3.1 sont ajoutés à 50 cl de jus de fruits (orange ou autre). Le mélange est ensuite mixé dans un bol mixer 2 à 3 mn. La préparation est ensuite transférée dans une sorbetière de ménage à accumulation de froid préalablement réfrigérée 12h au congélateur, puis turbinée 30 mn. La température de la préparation en fin de programme est d'environ -5°C. Le taux de foisonnement obtenu est de 65%.
La préparation glacée est ensuite mise en bac avant congélation à -18°C. Après quelques heures de congélations, on obtient un sorbet à la fois aéré et onctueux, parfaitement cuillérable dès la sortie du congélateur. La dureté obtenue est de 65N.
La teneur en sucres ajoutés du sorbet est de 28%.

## EXEMPLE 4 : PREPARATION D'UNE GLACE AUX FRUITS

***4.1. Préparation du mélange sec :*** les ingrédients sont mélangés pour donner le mélange pulvérulent sec suivant :

| Composition du mélange sec pulvérulent % : | |
|---|---|
| - Sucre | 80 |
| - fructose | 4,17 |
| - dextrose | 14,0 |
| - acide citrique | 0,9 |
| - agent stabilisant : carraghénanes | 0,85 |
| - agent foisonnant : protéine de pois | 0,08 |
| | 100 |

### 4.2. Préparation de la glace aux fruits

200 g du mélange sec pulvérulent préparé selon l'étape 4.1 sont ajoutés à 600 g de préparation à base de fruits (constituée de 300g de fruits, 200g de lait et 100g de crème). Le mélange est ensuite mixé dans un bol mixer ou un robot ménager pendant 2 à 3 mn. La préparation est ensuite transférée dans une sorbetière de ménage (1,5 1) à accumulation de froid préalablement réfrigérée un minimum de 12h au congélateur ou dans uns sorbetière à groupe froid indépendant, puis turbinée environ 30 à 60 mn en fonction des indications du fabriquant de sorbetières.
La température de la préparation en fin de programme est d'environ - 5°C. Le taux de foisonnement obtenu est de 56%.
La préparation glacée est ensuite mise en bac avant congélation à -18°C.
Après quelques heures de congélation, on obtient un sorbet à la fois aéré et onctueux, parfaitement cuillérable dès la sortie du congélateur. La dureté obtenue est de 50N.

## EXEMPLE 5: INFLUENCE DE L'AGENT FOISONNANT ET DE L'AGENT STABILISANT SUR LE TAUX DE FOISONNEMENT ET LA DURETE DES SORBETS

### 5.1. Préparation des sorbets

Le sorbet I est un sorbet de référence aux fraises préparé selon le mode d'emploi d'une sorbetière ménagère et ne contenant que du saccharose et des fruits (pas d'agent foisonnant ni d'agent stabilisant).
Le sorbet II correspond à l'exemple 1 du brevet GB 341963.
Les sorbets III et IV sont préparés respectivement selon les exemples 1 et 3 de l'invention.
Le sorbet V est un sorbet aux fraises contenant uniquement des agents stabilisants (pas d'agent foisonnant).

### 5.2. Résultats

Ils sont donnés dans le tableau 1.
En l'absence d'agent foisonnant et d'agent stabilisant, le foisonnement est nul et le sorbet obtenu est très dur donc difficilement cuillérable (exemple I).
En présence d'agent stabilisant seul (absence d'agent foisonnant), le foisonnement est très faible et les sorbets obtenus sont également très durs donc difficilement cuillérables (exemples II et V).
En présence d'agent foisonnant et d'agent stabilisant, les sorbets selon l'invention présentent un bon foisonnement et donc une très bonne cuillérablité (exemples III et IV).

**Tableau 1**

|  | I | II | III | IV | V |
|---|---|---|---|---|---|
| **OBJECTIF** | Référence | Exemple 1 brevet GB 1341963 | Selon l'invention | | |
|  | Saccharose seul OM 250 µm | Saccharose OM 250 µm | Exemple 1 | Exemple 3 | Sans protéine de pois |
| **GLUCIDES** | | | | | |
| Saccharose (g) | 200 | 129 | 160 | 155 | 180 |
| Dextrose (g) | 0 | 64 | 28 | 30 | 8,30 |
| Fructose (g) | 0 | 0 | 8,34 | 10 | 8,30 |
| **ACIDIFIANT** | | | | | |
| Acide citrique (g) | 0 | 3,6 | 1,8 | 3,8 | 1,8 |
| **STABILISANT** | | | | | |
| Carraghénane (g) | 0 | 0,88 | 1,70 | 0,8 | 0,8 |
| Guar (g) | 0 | 0 | 0 | 0,30 | 0,32 |
| Xanthane (g) | 0 | 0 | 0 | 0 | 0,48 |
| CMC (g) | 0 | 1,76 | 0 | 0 | 0 |
| Méthyl cellulose (g) | 0 | 0,54 | 0 | 0 | 0 |
| **FOISONNANT** | | | | | |
| Protéine de pois (g) | 0 | 0 | 0,16 | 0,1 | 0 |
| TOTAL (g) | 200 | 200 | 200 | 200 | 200 |
| **RAPPORTS** | | | | | |
| E/M | / | / | 10,6 | 11 | / |
| S/M | / | / | 1227 | 1950 | / |
| S/E | / | 219 | 115 | 177 | 123 |
| **FRUITS** | | | | | |
| Type de fruit | Fraises | Fraises | Fraises | Jus d'orange | Fraises |
| Quantité (g) | 500 | 500 | 600 | 500 | 600 |
| **Mesures sur sorbet** | | | | | |
| Foisonnement (%) | 0 | 10 | 75 | 70 | 20 |
| Dureté du sorbet (N) | >350 | >350 | 54 | 65 | 300 |

| Cuillérabilité du sorbet 5 : Très cuillérable 0 : Pas cuillérable | 0 | 0 | 5 | 5 | 1 |
|---|---|---|---|---|---|
| Pailletage du sorbet 5 : Très pailleté 0 : Pas pailleté | 5 | 0 | 0 | 0 | 1 |

CMC = carboxyméthylcellulose

OM = Granulométrie moyenne des cristaux de sucre

E = agent stabilisant ; M = agent foisonnant ; S = sucres totaux

**EXEMPLE 6: INFLUENCE DE LA COMPOSITION EN GLUCIDES SUR LA QUALITE DU SORBET**

### 6.1. Préparation des sorbets

Des sorbets à la fraise sont préparés selon l'exemple 1 avec des compositions en glucides variables selon le tableau 2 qui suit.

**Tableau 2**

|  | VI | VII | VIII | IX | X |
|---|---|---|---|---|---|
| Saccharose (%) | 92 | 100 | 96 | 96 | 80 |
| Dextrose (%) | 4 | 0 | 0 | 4 | 15 |
| Fructose (%) | 4 | 0 | 4 | 0 | 5 |
| Total glucides (%) | 100 | | | | |

### 6.2. Résultats

Ils sont donnés dans le tableau 3

**Tableau 3**

|  | VI | VII | VIII | IX | X |
|---|---|---|---|---|---|
| **GLUCIDES** | | | | | |
| Saccharose (g) | 180,62 | 196,34 | 188,48 | 188,48 | 157,08 |
| Dextrose (g) | 7,86 | 0 | 0 | 7,86 | 29,46 |
| Fructose (g) | 7,86 | 0 | 7,86 | 0 | 9,8 |
| **ACIDIFIANT** | | | | | |
| Acide citrique (g) | 1,8 | 1,8 | 1,8 | 1,8 | 1,8 |
| **STABILISANT** | | | | | |
| Carraghénane (g) | 1,7 | 1,7 | 1,7 | 1,7 | 1,7 |
| **FOISONNANT** | | | | | |
| Protéine de pois (g) | 0,16 | 0,16 | 0,16 | 0,16 | 0,16 |
| TOTAL (g) | 200 | 200 | 200 | 200 | 200 |
| **RAPPORTS** | | | | | |
| E/M | 10,6 | 10,6 | 10,6 | 10,6 | 10,6 |
| S/M | 1227 | 1227 | 1227 | 1227 | 1227 |
| S/E | 115 | 115 | 115 | 115 | 115 |
| **FRUITS** | | | | | |
| Type de fruit | Fraises | Fraises | Fraises | Fraises | Fraises |
| Quantité (g) | 600 | 600 | 600 | 600 | 600 |
| **Mesures sur sorbet** | | | | | |
| Foisonnement (%) | 60-75 | 60-75 | 60-75 | 60-75 | 60-75 |
| Cuillérabilité après congélation 7 jours | 5 | 3 | 4 | 4 | 5 |
| Pailletage après congélation 7 jours | 1 | 2 | 1 | 1 | 0 |
| Goût 5 : très fruité 0 : pas fruité | 3 | 2 | 3 | 2 | 4 |

Les sorbets selon l'invention sont parfaitement cuillèrables et présentent une texture en bouche et un goût agréable.

La présence de fructose (exemples VI, VIII et X) a un effet exhausteur de goût et renforce le goût du fruit.

## EXEMPLE 7: CARACTERISTIQUES PHYSICO-CHIMIQUES ET

## ORGANOLEPTIQUES DES SORBETS

### 7.1. Préparation des sorbets

Trois types de sorbets sont préparés : deux à l'aide d'une sorbetière et un sans sorbetière.
Le sorbet selon EP 2 145 546 est préparé soit avec soit sans sorbetière; on ajoute 500g de fraises à 250 g de mélange pulvérulent sec préparé selon EP 2 145 546 :

- Sans sorbetière, les ingrédients sont mixés pendant 3min puis le mix est conditionné et stocké au congélateur 7 jours à -18°C.
- Avec sorbetière, les ingrédients sont mixés pendant 2 min puis le mix est transféré dans une sorbetière et turbiné 30min. Le sorbet est ensuite conditionné et stocké au congélateur 7 jours à -18°C.

Le sorbet selon l'invention est préparé en utilisant une sorbetière; on ajoute 600 g de fraises à 200 g de mélange pulvérulent selon l'invention. Les ingrédients sont mixés pendant 2min puis le mix est transféré dans une sorbetière et turbiné 30min. Le sorbet est ensuite conditionné et stocké au congélateur 7 jours à -18°C.
Les rapports de chaque sorbet sont donnés dans le tableau 4

**Tableau 4**

|  | Exemple 1 du brevet EP 2 145 546 sans sorbetiètre | Exemple 1 du brevet EP 2 145 546 avec sorbetiètre | Invention avec sorbetière |
|---|---|---|---|
| **E/M** | 0,8 | 0,8 | 10 |
| **S/M** | 38 | 38 | 1402 |
| **S/E** | 47 | 47 | 140 |
| **Fruit / sucre sorbet** | 2 | 2 | 3 |

### 7.2. Résultats

7.2.1. Foisonnement

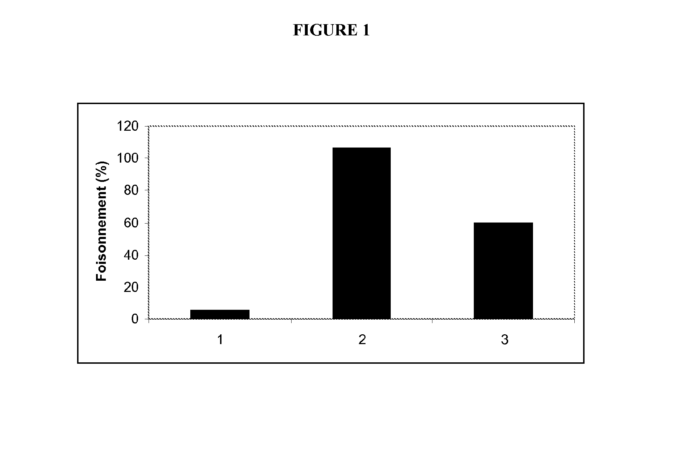

Les résultats sont donnés dans la figure 1.
Le sorbet selon EP 2 145 546 en sorbetière est beaucoup trop foisonné pour un sorbet (110% de foisonnement). Le sorbet a un aspect mousseux.
Le sorbet selon EP 2 145 546 sans sorbetière foisonne peu (5% de foisonnement).
Le sorbet selon l'invention en sorbetière a un foisonnement satisfaisant pour un sorbet (60% de foisonnement).
Le mélange sec pulvérulent selon l'invention est parfaitement adapté au process « sorbetière ».

7.2.2. Dureté

Les résultats sont donnés dans le tableau 5 qui suit.

| Sorbet | Dureté moyenne (N) | écart-type |
|---|---|---|
| EP 2145546 **sans sorbetière** | 91 | 19 |
| EP 2145546 **avec sorbetière** | 18 | 5 |
| **Invention avec sorbetière** | 52 | 12 |

En sorbetière, le sorbet selon l'invention parait plus dur que celui obtenu selon EP 2 145 546 mais la différence perçue par l'appareil de mesure (texturomètre) n'est pas détectable en bouche. En effet, les juges considèrent la dureté identique (voir paragraphe 7.2.3. ligne 17).
En revanche, sans sorbetière, le sorbet selon EP 2 145 546 est moins cuillérable (plus dur) que le sorbet selon l'invention. D'ailleurs les juges préfèrent la texture à la cuillère du sorbet selon l'invention en sorbetière (voir paragraphe 7.2.3. ligne 20).

7.2.3. <u>Caractéristiques organoleptiques</u>

- *Méthode utilisée :*

La comparaison entre les deux sorbets préparés en sorbetière selon EP 2 145 546 ou selon l'invention et celle entre le sorbet préparé en sorbetière selon l'invention et le sorbet sans sorbetière préparé selon EP 2 145 546 sont réalisées selon la méthode classique des échantillons appariés (Evaluation sensorielle, Manuel méthodologique, Lavoisier, Tec&Doc).

Les sorbets ont été présentés à 11 juges à une température de dégustation de -15 °C; chaque juge devait évaluer pour chacun des produits, l'intensité de différents caractères.

- *Comparaison entre les sorbets avec sorbetière:*

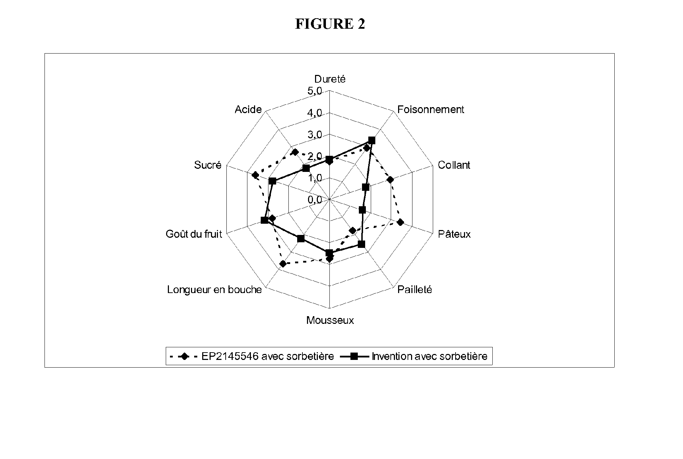

Les résultats sont donnés dans la figure 2.

Selon la loi de Student à n-1 degrés de liberté, les deux sorbets préparés avec une sorbetière soit selon EP 2 145 546 soit selon l'invention sont significativement différents pour l'ensemble des descripteurs hormis la dureté (figure 2).

En outre, 7 juges sur 11 soit 64 % des juges préfèrent le sorbet selon l'invention à celui préparé selon EP 2 145 546 avec la sorbetière.

- *Comparaison entre le sorbet avec sorbetière selon l'invention et le sorbet sans sorbetière selon EP 2 145 546 :*

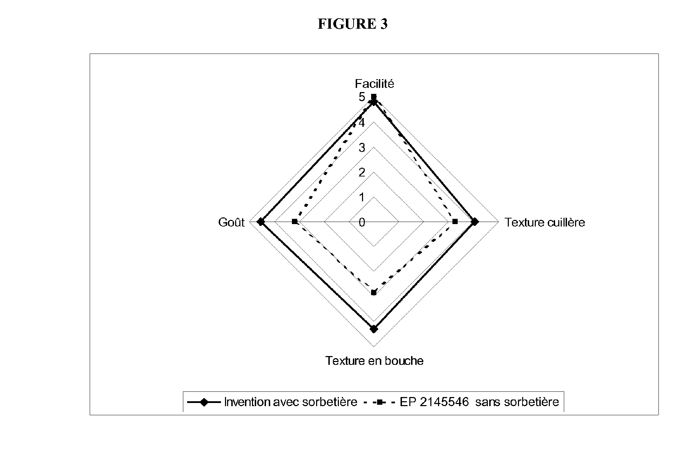

Les résultats sont donnés dans la figure 3.

Selon la loi de Student à n-1 degrés de liberté, les deux sorbets préparés soit sans sorbetière selon EP 2 145 546 soit avec une sorbetière selon l'invention sont significativement différents pour l'ensemble des descripteurs (figure 3).

**Revendications**

1. Mélange sec pulvérulent pour la préparation de sorbet ou de glace aux fruits à l'aide d'une machine à glace, le dit mélange étant apte à être mélangé à des fruits ou à des préparations à base de fruits comprenant :

   a) au moins un sucre,
   b) au moins un agent foisonnant,
   c) au moins un agent stabilisant,
   d) au moins un acide alimentaire,

   le rapport agent stabilisant/agent foisonnant étant supérieur à 10, le rapport sucres/agent foisonnant étant supérieur à 100 et le rapport sucres totaux/agent stabilisant étant supérieur à 100.

2. Mélange sec pulvérulent selon la revendication 1 contenant:

   a) 75% à 99% en poids total du mélange sec de saccharose,
   b) 0 à 25% en poids total du mélange sec de dextrose, avantageusement de 5 à 20%,
   c) 0 à 10% en poids total du mélange sec de fructose, avantageusement de 3 à 8%,
   d) 0,5 à 2% en poids total du mélange sec d'au moins un acide alimentaire, avantageusement l'acide citrique,
   e) 0,5 à 1% en poids total du mélange sec d'au moins un agent stabilisant
   f) 0,01 à 0,95% en poids total du mélange sec d'au moins un agent foisonnant

3. Mélange sec pulvérulent selon l'une quelconque des revendications 1 ou 2 **caractérisé en ce que** l'agent foisonnant est choisi parmi les protéines hydrolysées ou non d'origine végétale ou animale.

4. Mélange sec pulvérulent selon la revendication 3 **caractérisé en ce que** l'agent foisonnant est la protéine de pois hydrolysée.

5. Mélange sec pulvérulent selon l'une quelconque des revendications 1 à 4 **caractérisé en ce que** l'agent stabilisant est choisi parmi les épaississants et les gélifiants qui développent leurs propriétés à froid, avantageusement parmi les carraghénanes.

6. Procédé de préparation d'un sorbet ou d'une glace aux fruits selon l'une quelconque des revendications 1 à 5 comprenant les étapes suivantes :

   a) ajouter à des fruits ou à une préparation à base de fruits le mélange sec pulvérulent,
   b) mixer l'ensemble
   c) placer le mélange mixé dans la machine à glace préalablement refroidie si le système de froid est un accumulateur de froid,
   d) laisser turbiner entre 5 et 60 minutes selon le type de machine à glace et
   e) conditionner et stocker au congélateur.

7. Procédé selon la revendication 6 **caractérisé en ce que** le rapport fruit ou préparation à base de fruits/mélange sec pulvérulent est compris entre 2,5 et 3,5 avantageusement égal à 3.

8. Sorbet ou glace préparé en machine à glace à partir de fruits ou d'une préparation à base de fruits et du mélange sec pulvérulent selon l'une quelconque des revendications 1 à 5 **caractérisé :**

   a) **par** sa cuillérabilité avec une dureté comprise entre 40N et 65N
   b) par un foisonnement compris entre 20 et 90%
   c) par une texture lisse non pailletée.

9. Utilisation d'un mélange sec pulvérulent selon l'une quelconque des revendications 1 à 5 comme sucre pour la préparation de sorbets à base de fruits ou de préparation à base de fruits.

**FIGURE 1**

**FIGURE 2**

**FIGURE 3**

**EP 2 389 817 A1**

Europäisches
Patentamt

European
Patent Office

Office européen
des brevets

# RAPPORT DE RECHERCHE EUROPEENNE

Numéro de la demande

EP 11 30 5555

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A,D | EP 2 145 546 A1 (PFEIFER & LANGEN KOMMANDITGESE [DE]) 20 janvier 2010 (2010-01-20) * abrégé * * le document en entier * ----- | 1-9 | INV. A23G9/00 A23L1/00 A23L1/0532 A23L1/09 |
| A | GB 1 341 963 A (TATE & LYLE LTD) 28 décembre 1973 (1973-12-28) * le document en entier * ----- | 1-9 | |
| A,D | FR 2 885 013 A1 (NECTARYS SA [FR]) 3 novembre 2006 (2006-11-03) * abrégé * * le document en entier * ----- | 1-9 | |
| A,D | US 5 082 682 A (PETERSON BENJAMIN R [US]) 21 janvier 1992 (1992-01-21) * colonne 3 - colonne 7; tableau 1 * ----- | 1-9 | |
| A | WO 2008/127206 A1 (OZMER MEYVE OZLERI KOKTEYL SOS [TR]; BERBER OMER FARUK [TR]) 23 octobre 2008 (2008-10-23) * page 2, ligne 25-33 * * page 4, ligne 9-20 * * page 5, ligne 15-25; tableau 1 * ----- | 1-9 | DOMAINES TECHNIQUES RECHERCHES (IPC) A23G A23L |
| A | US 4 826 656 A (HUBER CLAYTON S [US] ET AL) 2 mai 1989 (1989-05-02) * abrégé * * colonne 1, ligne 30-40 * * colonne 2, ligne 61-64 * * colonne 4, ligne 22-40 * ----- | 1-9 | |

Le présent rapport a été établi pour toutes les revendications

| Lieu de la recherche | Date d'achèvement de la recherche | Examinateur |
|---|---|---|
| Munich | 10 octobre 2011 | de La Tour, Camille |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

......................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 11 30 5555

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

10-10-2011

| Document brevet cité au rapport de recherche | | Date de publication | Membre(s) de la famille de brevet(s) | | Date de publication |
|---|---|---|---|---|---|
| EP 2145546 | A1 | 20-01-2010 | AUCUN | | |
| GB 1341963 | A | 25-12-1973 | AUCUN | | |
| FR 2885013 | A1 | 03-11-2006 | AUCUN | | |
| US 5082682 | A | 21-01-1992 | US | 5215776 A | 01-06-1993 |
| WO 2008127206 | A1 | 23-10-2008 | EA<br>TR | 200970950 A1<br>200702566 A2 | 30-04-2010<br>22-10-2007 |
| US 4826656 | A | 02-05-1989 | AUCUN | | |

EPO FORM P0460

Pour tout renseignement concernant cette annexe : voir Journal Officiel de l'Office européen des brevets, No.12/82

**EP 2 389 817 A1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2885013
- US 5082682 A
- GB 341963 A
- EP 2145546 A

**Littérature non-brevet citée dans la description**

- Evaluation sensorielle, Manuel méthodologique. Lavoisier